# EUROPEAN PATENT APPLICATION

(11) **EP 4 628 202 A1**
(43) Date of publication of application: **08.10.2025**
(21) Application number: 25165712.8
(22) Date of filing: 24.03.2025
(51) Int. Cl.: B01J 8/00

(54) **REACTOR TUBE LOADED WITH CATALYST AND METHOD FOR DOWNLOADING SAID CATALYST**

(30) Priority: 02.04.2024 IT 202400007237
(71) Applicant: I.T.T. S.p.A., 20121 Milano (IT)
(72) Inventor: MANENTI, Giovanni, 24064 GRUMELLO DEL MONTE (BG) (IT); CASSINARI, Massimo, 20089 ROZZANO (MI) (IT)
(74) Representative: Ottazzo, Marco Francesco Agostino

(57) **Abstract**

A vertical catalytic tube T, filled with a granular catalyst C, designed for conducting chemical reactions within a tube-side fluid F is disclosed. The vertical catalytic tube T comprises an upper terminal part and a lower terminal part 4. The lower terminal part 4 includes a fluid outlet connection 5. The vertical catalytic tube T also includes a catalyst support system 6 and a transverse opening 11 located between the outlet connection 5 and the upper terminal part, where the support system 6 is configured to reduce the metal temperature of the transverse opening 11. A method for the maintenance on a catalytic tube T is also described. According to the method, the support system 6 and the catalyst C are respectively removed and downloaded through the tangential opening 11.

## Description

### Scope

The present invention relates to a tube of a vertical chemical reactor, internally loaded with a granular catalyst, to carry out chemical reactions within the fluid flowing inside the tube. In particular, the present invention relates to the tubes of steam hydrocarbons reforming reactors, loaded with catalyst, capable of producing a process gas rich in hydrogen and carbon oxides. The present invention relates to a catalytic tube configuration having a system, installed at the lower terminal part of the tube, to support and discharge the catalyst. The present invention also covers the relevant downloading method of the catalyst from the tube.

### Introduction

The tubes of a chemical reactor, having a granular catalyst internally loaded, are usually placed vertically. Depending on the reactor technology, the tubes are often equipped with a catalyst support system and a fluid outlet connection installed at the bottom of the catalytic tube. The catalyst is usually loaded into the tube from the top, whereas it is downloaded either from the bottom or top depending on the reactor technology. Catalytic tubes installed in steam hydrocarbons reforming reactors (reformers) are an important case in the chemical industry.

Reformers essentially comprise a chamber with retaining walls internally lined by refractory, heating and/or heat exchange systems or methods, and vertical catalytic tubes. Chemical reactions that take place inside the tubes of reformers are strongly endothermic and therefore require a large amount of heat. The catalyst loaded inside the tubes is of the granular type, often in the form of pellets or spheres. According to current technology, a steam reformer tube works at approximately 650-950°C, usually at 800-950°C, with an internal pressure of approximately 2-4 MPa. The tube material is usually a metal alloy based on iron, nickel and chromium, which is resistant to high temperatures; The tube has an outer diameter that is usually between 2 and 6 inches, usually between 4 and 6 inches, and has a catalytic length that usually does not exceed 12 meters. A reformer can count from a few catalytic tubes to hundreds of catalytic tubes. A gas substantially consisting of steam and hydrocarbons enters the tubes and, after reforming, a gas rich in hydrogen and carbon oxides comes out of the tubes at a temperature of approximately 600-920°C, usually between 750-900°C. According to one of the most popular technologies on the market, the reagents enter from the top of the catalytic tube, flow along the tube through the catalyst and exit from the bottom of the tube. If the catalyst loaded into the tube is supported by means of a specific system, usually including a grid and placed near the lower wall of the reformer, this system allows the passage of the gas but not of the catalyst.

Given the severe operating conditions and the possible presence of secondary chemical reactions, the catalyst of a reformer has an operational life of some years, after which it must be replaced. In some cases, the catalyst or the tubes may be damaged before reaching the end of their operational life; in this case, the catalyst and/or the tube must be replaced or taken out of service.

### State of the art

Several systems to support the catalyst within a catalytic tube, including the related methods for downloading the catalyst, are known.

Patent document GB 1197202 A discloses a vertical catalytic tube with the lower end extending outside the chemical reactor and equipped with a flange. A catalyst support system, installed at the lower end, consists of a grate that allows the fluid to pass through but not the catalyst, two support plates, and two support tubes coaxial with each other and arranged coaxially with respect to the catalytic tube. The innermost support tube conveys the fluid, passed through the grated, to the flanged outlet of the catalytic tube. The catalyst support system is supported by brackets leaning on the internal walls of the catalytic tube; to discharge the catalyst, the support system is removable from the end by rotating the brackets. Consequently, the patent document GB 1197202 A differs substantially from the present invention both in the configuration of the bottom portion of the catalytic tube, since the fluid essentially exits from the bottom of the tube along the axial direction, and in the configuration of the catalyst support system and related method of extraction from the catalytic tube.

Patent document US 2203840 A discloses a vertical catalytic tube with the lower end having two threaded openings, an axial opening to extract the support system and catalyst and a radial opening to feed the process fluid, and equipped with a catalyst support system having a bar and a perforated disc that allows the fluid to pass through but not the catalyst. The bar, connected to the perforated disc, leans on the bottom of the tube. The bar, through one of the openings, can be moved to rotate the perforated disc and discharge the catalyst. Consequently, the patent document US 2203840 A differs substantially from the present invention in the configuration of the catalyst support system and relevant method of extraction from the tube.

Patent document US 3127248 A discloses a vertical catalytic tube having a conical lower end part, provided with an opening, and an internal fluid conveying tube coaxial to the catalytic tube. The catalyst substantially fills-in the entire lower end part and, consequently, it is the tube itself that acts as a support system for the catalyst. The end part can be opened to discharge the catalyst. The fluid does not exit from the lower end of the catalytic tube.

Patent document GB 1036447 A discloses a vertical catalytic tube having a catalyst support system that has a longitudinal element connected to the end of the lower part. The end cannot be opened, and the fluid does not exit from the lower part. The catalyst is then downloaded from the upper part of the tube.

Patent document US 3935225 A discloses a vertical catalytic tube with the lower end internally equipped with a bracket for a grid supporting the catalyst and permeable to the fluid. A cone and a fluid conveying tube, coaxial relative to the catalytic tube, are installed under the grid. The catalyst can only be extracted from the upper terminal part of the catalytic tube.

Patent document US 4830091 A shows the lower end of a vertical catalytic tube that is internally provided with a fluid-permeable grid and supporting the catalyst. The catalyst is extracted from the upper terminal part of the catalytic tube.

Patent document US 2022/226795 A1 discloses a catalytic tube according to the preamble of claim 1. The catalytic tube is a shell-and-tube catalytic reactor provided with unloading catalyst nozzles on shell-side.

### Technical problem to be solved

The configuration of the lower terminal part of a catalytic tube and of the catalyst support system must guarantee a limited pressure drop of the fluid, limited metal temperatures of the pressure parts and allow functional maintenance operations. In general, the replacement of the catalyst installed inside catalytic tubes is a critical maintenance operation from safety and technical-commercial viewpoint.

In the specific case of catalytic tubes installed in steam reformers and with the fluid outlet from the bottom, according to the most widespread current technique and cited patent documents US 3935225 A and US 4830091 A, the catalyst is not downloaded from the bottom of the tube, but from the top of the tube by means of a suction device. In practice, a suction duct inserted into the catalytic tube from the top removes the catalyst and transports it to an external gas-solid filtration device. The advantage of this technique lies in the fact that the lower terminal part of the catalytic tube does not require a complex configuration and a removable catalyst support system.

However, the suction operation from the upper terminal part of the catalytic tube requires specific equipment and skilled crew, involves considerable consumption of electricity, and usually this operation has a significant impact on operating costs as it requires long intervention times and therefore plant shutdown.

On the contrary, when the catalyst is downloaded from the bottom, the unloading operation is easier and faster, but the configuration of the lower terminal part of the catalyst tube and the catalyst support system are complex, difficult to implement and expensive.

For example, the cited patent document US 3539304 A requires a complex support system and a special double coupling for the fluid outlet connection.

For example, the cited patent document US 2203840 A can only be used for the inlet of reactants, whereas for the outlet of reaction products the terminal part with threaded openings would work at prohibitive metal temperatures.

For example, the cited patent document US 3127248 A does not allow the process fluid to be extracted from the lower terminal part of the catalytic tube.

### Brief description of the invention

The present invention discloses a vertical catalytic tube having the lower terminal part configured both to extract the fluid and to discharge the catalyst from the bottom of the tube, limiting the metal temperatures of the pressure parts and simplifying maintenance operations. The invention disclosed here optimizes capital costs and reduces operational costs by reducing maintenance and catalyst downloading times, specifically for chemical reactors, and more specifically for steam hydrocarbons reforming reactors.

In other words, the present invention remedies the technical-economic limitations related to the solutions disclosed in the above-mentioned prior-art patent documents.

The catalytic tube covered by the present invention is placed vertically and provided with at least one inlet connection and at least one outlet connection for the tube-side fluid, respectively positioned at the top end and bottom end of the tube. In the case of reforming reactors, the lower terminal part of the catalytic tube covered by the present invention extends through the reactor retaining wall and terminates outside the reactor. The fluid outlet is also located outside the reactor chamber.

The lower terminal part of the catalytic tube has a tubular opening, transversal to the longitudinal axis of the catalytic tube and extending from the wall of the catalytic tube to the outside of the tube. The tubular transverse opening can have a longitudinal axis forming a right or acute angle to the longitudinal axis of the catalytic tube; in other words, the transverse opening can be perpendicular or oblique to the catalytic tube. The transverse opening detaches from the catalytic tube at a point outside the reactor chamber and is located between the reactor retaining wall and the fluid outlet connection. The transverse opening is configured for catalyst discharge.

A catalyst support system, removable or partially removable, is installed at the lower terminal part of the catalytic tube, and it is object of the present invention. The support system includes a first element that develops substantially longitudinally relative to the longitudinal axis of the transverse opening, a second element that develops substantially radially relative to the longitudinal axis of the transverse opening and a third element that develops substantially radially or radially and longitudinally relative to the longitudinal axis of the catalytic tube. The first and second elements are placed in the transverse opening, while the third element is placed in the catalytic tube.

The first element is preferably a rod, or a bar, having one end connected to the outermost end, relative to the catalytic tube, of the transverse opening and having the other end connected to the second element; the first element transfers the weight of the catalyst to the outer end of the lower terminal part.

The second element is preferably a disc, or a shaped disc, and acts as a stopper preventing the catalyst from entering the transverse opening. The second element forms a small gap with the wall of the catalytic tube, so that the passage of the fluid is negligible.

The third element is preferably a grid or a perforated plate that allows the process fluid to pass through but not the catalyst; the third element, in the case of reforming reactors, is preferably shaped so as to form a small gap at or near the inner wall of the catalytic tube.

The catalyst support system, at the lower terminal part of the catalytic tube, delimits three zones: a first zone delimited by the second element, substantially corresponding to the internal volume of the transverse opening, a second zone delimited by the third element and placed below the third element, substantially corresponding to the internal volume of the catalytic tube without catalyst, and a third zone delimited by the third element and placed above the third element, substantially corresponding to the internal volume of the catalytic tube filled with the catalyst. The fluid outlet connection detaches from the second zone.

As a result, the first zone corresponds to a stagnant fluid chamber, the second zone corresponds to the fluid outlet chamber, and the third zone corresponds to the reaction chamber of the catalytic tube.

The outer end of the transverse opening can be opened, preferably by means of a flange, to remove at least a portion of the catalyst support system and to download the catalyst itself.

Based on the above, as a person skilled in the art can understand, the stagnant fluid chamber allows to mitigate the temperature of the outer end of the transverse opening. In other words, with an appropriate length of the stagnant fluid chamber, the metal temperature of the outer end can be reduced. This benefits mechanical design and selection of construction material of the outer end.

Features and advantages of the present invention will be more evident from the following description, which is exemplificative but not exhaustive, related to the attached schematic drawings as follows:
Figure 1 is a longitudinal view, in section, of the lower terminal part of a catalytic tube according to a preferential configuration of the present invention;
Figure 2 is another longitudinal view, in section, of the lower terminal part of the catalytic tube in figure 1, showing the removal of a portion of the catalyst support system according to a method of the present invention; and
Figure 3 is another longitudinal view, in section, of the lower terminal part of the catalytic tube in figure 1, showing the operation of downloading the catalyst according to a method of the present invention.

### Detailed description of the invention

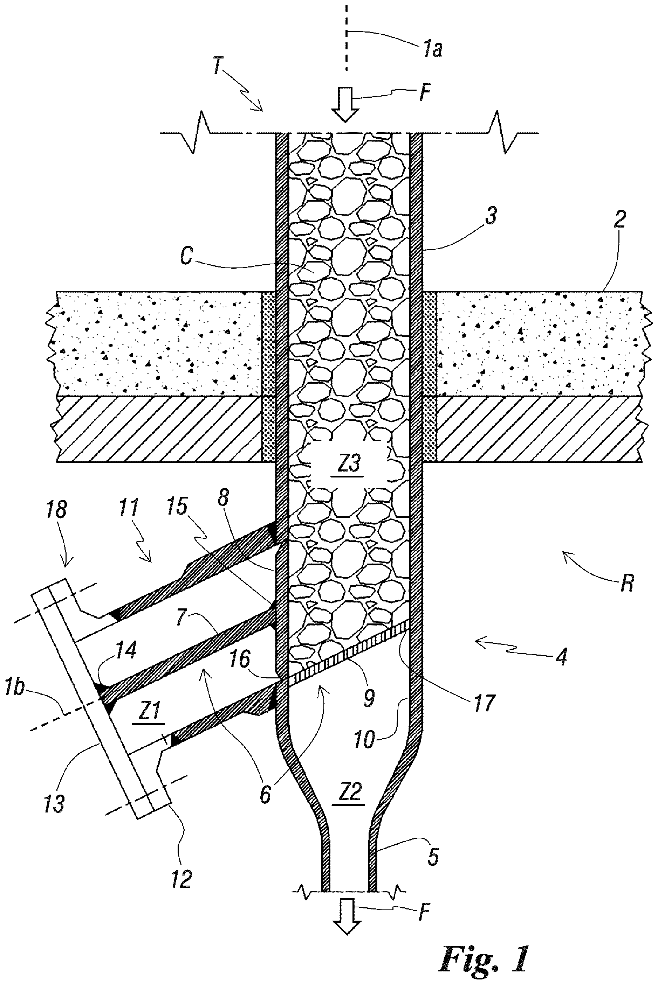

Figure 1 shows the longitudinal and cross-sectional view of the lower terminal part 4 of a catalytic tube T, having a first vertical longitudinal axis 1a, according to a preferential configuration of the present invention.

The catalytic tube T in figure 1 is part of a chemical reactor R, delimited by a retaining wall 2, and includes a pressure tube 3, an inlet connection (not shown in the figures) located at the upper terminal part of the catalytic tube T to inlet a tube-side fluid F, an outlet connection 5 located at the lower terminal part 4 of the catalytic tube T to extract the tube-side fluid F, a granular catalyst C loaded inside the pressure tube 3 and a removable or partially removable catalyst support system 6, installed inside the catalytic tube T at the lower terminal part 4. The fluid outlet connection 5 includes a converging portion of the pressure tube 3.

The lower terminal part 4 of the catalytic tube T in figure 1 extends beyond the retaining wall 2, terminating outside the reactor R. The outlet connection 5 of fluid F is located outside the reactor R and is axial to the pressure tube 3. The lower terminal part 4 has a transverse opening 11 located outside the reactor R. As per the configuration in figure 1, the transverse opening 11 has a tubular shape and has a second longitudinal axis 1b.

The transverse opening 11 of figure 1 detaches at a point of pressure tube 3 located between the inlet and outlet connections 5 of fluid F and, more specifically, between the retaining wall 2 of reactor R and the outlet connection 5 of fluid F. The transverse opening 11 develops transversely relative to the pressure 3 tube, along the second longitudinal axis 1b, and ends with an external openable end 18 distant from the pressure 3 tube. The external end 18 has the second longitudinal axis 1b forming an acute angle with the first longitudinal axis 1a, so that to be tilted, facing downwards and discharge the catalyst C. The external openable end 18 is equipped with a flange connection 12 and a blind counter-flange 13.

The support system 6 of catalyst C in figure 1 comprises a first element 7 substantially extended along the longitudinal axis 1b of the transverse opening 11, a second element 8 substantially extended in the radial, or radial and longitudinal direction, relative to the longitudinal axis 1b of the transverse opening 11, and a third element 9 extended in the radial, or radial and longitudinal directions, relative to the longitudinal axis 1a of the pressure tube 3. Preferably the first element 7 corresponds to a rod or a bar. Preferably the second element 8 corresponds to a shaped disc. The third element 9 is permeable to tube-side fluid F but does not allow catalyst C to pass through. In other words, the third element 9 has openings whose dimensions are smaller than the granules of catalyst C. The third element 9 is preferably a perforated disc, or a perforated cone, or a grid extending over the entire internal cross-section of the pressure tube 3. The first element 7 and the second element 8 are substantially placed within the transverse opening 11 and are arranged in series relative to the second longitudinal axis 1b. The third element 9 is placed inside the pressure tube 3.

The second element 8 acts as a plug or closure of the transverse opening 11 at the detachment from the pressure tube 3 and therefore the second element 8 prevents the catalyst C, during the operation of the reactor R, from entering the transverse opening 11. As shown in figure 1, the second element 8 is placed at the wall of the pressure 3 tube. Preferably, the second element 8 basically corresponds to the missing portion of the wall of the pressure 3 tube. Preferably, the second element 8 is shaped and positioned in such a way as to form a continuous internal surface 10 inside the pressure 3 tube.

The second element 8 and the third element 9 form a first gap 16 and a second gap 17 respectively with the corresponding walls and/or surfaces of the pressure 3 tube. In particular, the second gap 17 is essentially formed between the third element 9 and the inner surface 10 of the pressure tube 3. The first gap 16, formed between the second element 8 and the wall of the pressure 3 tube, is such that the flow of tube-side fluid F through it is negligible. The second gap 17 is such that it does not allow the catalyst C to pass through.

As shown in figure 1, the first element 7 of the support system 6 of catalyst C is connected, at one end, to the blind flange 13 and, at the other end, to the second element 8. Preferably the first element 7 is jointed to the blind flange 13 by means of a first welded joint or connection 14 and to the second element 8 by a second welded joint or connection 15. Alternatively, the first connection 14 and/or the second connection 15 are obtained by screwing, bolting or interlocking.

The third element 9 of the support system 6 of the catalyst C, near the second interstice 17, can be held in place with support or fixing elements (not shown in the figures). The third element 9 can be alternatively welded to the pressure tube 3. As a result, the third element 9 can either be removed through the transverse opening 11 or be permanently attached to the pressure tube 3.

As shown in figure 1, the support system 6 inside the catalytic tube T forms three zones in fluid communication with each other. More specifically, the second element 8 delimits a first zone Z1 substantially corresponding to the internal volume of the transverse opening 11 and without catalyst C. The third element 9 delimits a second zone Z2 and a third zone Z3, relating to the pressure 3 tube, respectively without and with catalyst C. The second zone Z2 is placed below the third element 9, whereas the third zone Z3 is placed above the third element 9. The fluid outlet connection 5 is in direct fluid communication with the second zone Z2. Preferably, the outlet connection 5 is placed near the third element 9.

As shown in figure 1, the third element 9 has an inclination equal to or comparable to that of the transverse opening 11, to facilitate the discharge of the catalyst C. The third element 9, preferably, is positioned in such a way that the lower portion of the second gap 17 is in correspondence with the lower portion of the first gap 16. In accordance with a preferential configuration of the present invention, the third element 9 is positioned in the pressure tube 3 in such a way that the second zone Z2 is in direct fluid communication only with the third zone Z3 and, consequently, the first zone Z1 is in direct fluid communication only with the third zone Z3.

As per the configuration of figure 1, the reacting fluid F flows through the granular catalyst C, from top to bottom, reaches the third element 9 and passes through it, enters the second zone Z2 and exits the catalytic tube T through the outlet connection 5. The tube-side fluid F permeates the first zone Z1; the first zone Z1 corresponds to a chamber of stagnant fluid.

As a person skilled in the art can understand, at the first zone Z1 a temperature gradient is established substantially directed along the longitudinal axis 1b. More specifically, the metal temperature of the transverse opening 11 at the first zone Z1 decreases as the distance from the second element 8 increases.

Consequently, as a person skilled in the art can understand, the longitudinal extension of the transverse opening 11 is properly sized to obtain the desired metal temperature at its external end 18. Lower the metal temperature, lower the thickness and/or metallurgical grade that can be adopted for the flanged connection 12, 13 and, likewise, lower the installation cost. According to a preferential configuration of the present invention, the external end 18 of the transverse opening 11 has a different metallurgy, i.e. a less expensive metallurgy, than that of the remaining portion of the transverse opening 11.

According to a preferential configuration of the present invention, not shown in the figures, the first zone Z1 of figure 1 is partially or fully filled with thermally insulating material, such as ceramic fiber, to avoid natural convection flows. The fluid F, in any case, permeates the insulating material installed in the first zone Z1.

As a person skilled in the art can understand, the support system 6 of catalyst C shown in Figure 1 is robust and functional. The first element 7 holds the second element 8 in place and supports a fraction of the weight of catalyst C; the weight is transferred onto the blind flange 13. The third element 9 supports the largest fraction of the catalyst weight.

It should be noted that the support system 6 of catalyst C, object of the present invention, is partially or completely removable. In the first case, the first element 7 and the second element 8 are removed to discharge catalyst C through the transverse opening 11. In the second case, the third element 9 is also removed through the transverse opening 11, after catalyst C has been downloaded. However, as a person skilled in the art can understand, the removal of the third element 9 is not essential for the purpose of downloading the catalyst C and therefore the third element 9 is preferably permanently anchored to the inner surface 10 of the pressure tube 3.

It should be noted that the catalytic tube T shown in figure 1 may have some preferred configuration variants. According to one of these variants, the transverse opening 11 has the longitudinal axis 1b perpendicular to the longitudinal axis 1a of the pressure 3 tube. In this case, the transverse opening 11 is not tilted. The downloading of the catalyst C is less effective, however the construction of the lower terminal part 4 of the catalytic tube T is simpler, as the detachment of the transverse opening 11 is perpendicular to the pressure tube 3. According to another of these variants, the third element 9 does not have an inclination and therefore it is essentially a disc or grid perpendicular to the longitudinal axis 1a of the pressure tube 3. According to another of these variants, the outlet connection 5 of the fluid F is transverse and not axial.

Finally, it should be noted that the transverse opening 11 can have an internal diameter greater, identical or smaller than the internal diameter of the pressure 3 tube. Preferably, the inner diameter of the transverse opening 11 is identical or comparable to that of the pressure tube 3. It should also be noted that the catalytic tube T may be equipped with two or more transverse openings 11, possibly different in size and placed in different positions.

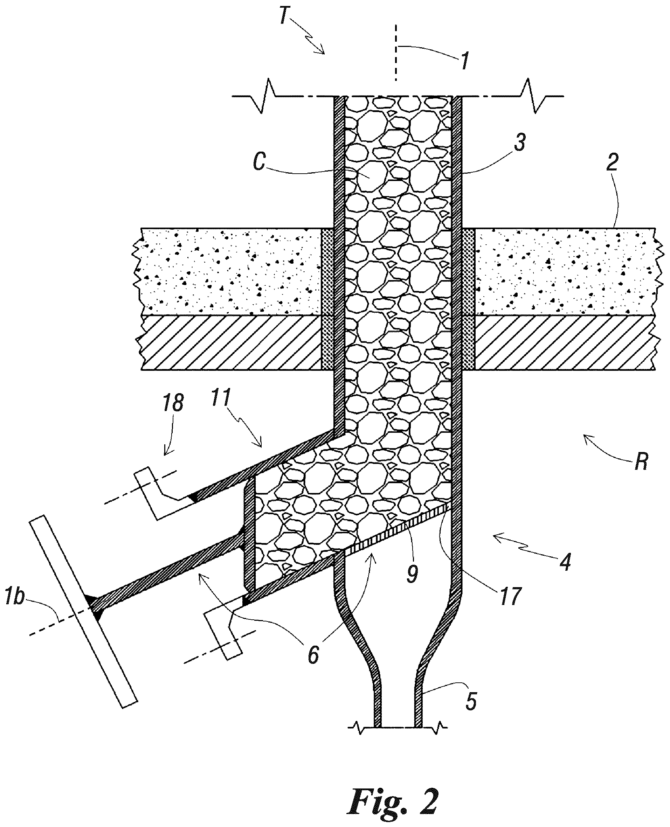

Figure 2 shows the longitudinal and cross-sectional view of the lower terminal part 4 of the catalytic tube T already described as per figure 1. Figure 2 shows a step of the downloading method of catalyst C covered by the present invention.

According to figure 2, the flange at the external end 18 of the transverse opening 11 has been opened. A portion of the support system 6, and specifically the first element 7 and the second element 8, is pulled along the longitudinal axis 1b of the transverse opening 11. The catalyst C, under the action of its own weight, falls along the transverse opening 11.

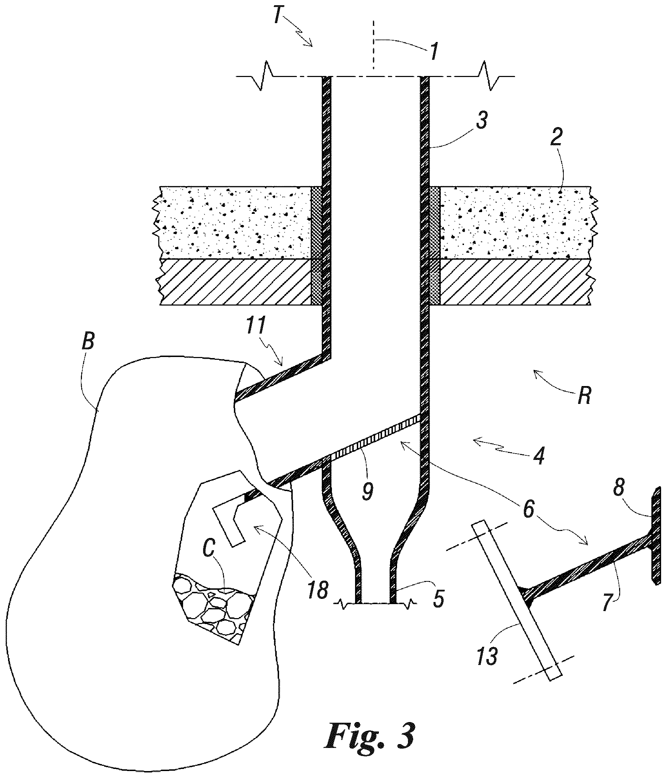

Figure 3 shows the longitudinal and cross-sectional view of the lower terminal part 4 of the catalytic tube T already described as per figure 1 and 2. In particular, Figure 3 shows another step of the downloading method of catalyst C covered by the present invention.

According to Figure 3, a portion of the support system 6 of catalyst C, and specifically the first element 7 and the second element 8, has been completely removed from the catalytic tube T. At the external end 18 of the transverse opening 11 there is a container or bag B where the granular catalyst C is collected. It should be noted that the container or bag B is configured to eliminate dust and to increase the safety of operators during the unloading operation. The container or bag B, for example, can wrap around the flanged end 18 and make a certain dust seal on it.

According to Figures 2 and 3, the method of downloading the catalyst C, relating to the catalytic tube T covered by the present invention, therefore includes the following steps:
- opening of the flange 12, 13 of the external end 18 relative to the transverse opening 11;
- removal of a portion of the support system 6 of catalyst C and removal of the same catalyst;
- discharge of the granular catalyst C into a special container B;
- insertion of the portion of the support system 6 of the catalyst C into the transverse opening 11;
- closure of the flange 12, 13 and possible loading of the fresh C catalyst.

The catalyst C loaded inside a catalytic tube T, depending on the diameter and length of the catalytic tube T, can weigh from a few tens to a few hundred kilograms. Consequently, if the weight of the catalyst column is excessive, the removal of the support system 6 can be carried out with the aid of a hoist or equivalent device.

Consequently, the method of downloading the catalyst C, relating to the catalytic tube T covered by the present invention, may optionally include the installation and use of a hoist, or equivalent device, connected at one end to the support system 6 of catalyst C or to the removable part of the external end 18 of the transverse opening 11.

As a person skilled in the art can understand, the maintenance method described above is practical, relatively fast and does not require the use of special equipment. Consequently, the catalytic tube T object of the present invention allows executing catalyst change in a short time, limiting plant downtime and costs for lost production.

As a person skilled in the art can understand, the present invention remains conceptually valid even when the catalytic tube T is not part of a chemical reactor, i.e. it is not partially contained by a retaining wall.

Finally, as a person skilled in the art can understand, the present invention remains conceptually valid even when the catalytic tube T is completely inserted into a chemical reactor, i.e. when it is fully surrounded by one or more retaining walls.

It is clear from the above description that the present invention achieves the purpose to provide a new catalytic tube T with a relatively simple and inexpensive lower terminal part 4 and a practical method of downloading the catalyst C without requiring special equipment; the present invention achieves the purpose to provide a new catalytic tube T particularly useful for steam hydrocarbons reforming reactors.

The catalytic tube T described above can be subject to numerous variants and modifications, in any case attributable to the same inventive concept. All details can be replaced by technically equivalent elements; in practice, the materials used, shapes and sizes can be varied and/or modified according to technical needs.

The scope of protection relating to the present invention is defined by the claims attached hereto.

## Claims

1. A catalytic tube (T), with a first vertical longitudinal axis (1a), designed to conduct chemical reactions under pressure on a tube-side fluid (F), the catalytic tube (T) comprising:
- a pressure tube (3) loaded with a granular catalyst (C);
- an upper terminal part having at least one inlet connection for the fluid (F) and a lower terminal part (4) having at least one outlet connection (5) for the fluid (F);
- an at least partially removable support system (6) for said catalyst (C); and
- at least one tubular transverse opening (11) designed to remove at least one portion of said support system (6) and said catalyst (C), wherein said transverse opening (11) is obtained at a point of the pressure tube (3) located between said inlet and outlet connections (5), develops transversely with respect to the pressure tube (3) along a second longitudinal axis (1b) and ends with an external openable end (18),
the catalytic tube (T) being **characterized in that** said support system (6) comprises:
- a first element (7) substantially developed along said second longitudinal axis (1b);
- a second element (8) developed radially, or radially and longitudinally, with respect to said second longitudinal axis (1b); and
- a third element (9) substantially developed radially, or radially and longitudinally, with respect to said first longitudinal axis (1a),
wherein said first element (7) and said second element (8) are substantially placed in said transverse opening (11) and in series along said second longitudinal axis (1b), while said third element (9) is placed in said pressure tube (3) so as to delimit within said catalytic tube (T) a first zone (Z1) substantially corresponding to the internal volume of said transverse opening (11) and without a catalyst (C), a second zone (Z2) placed below said third element (9) and without a catalyst (C) and a third zone (Z3) placed above said third element (9) and filled-in with a catalyst (C), wherein said zones (Z1, Z2, Z3) are in fluid communication with each other, wherein said second element (8) is configured to make negligible the fluid (F) flow between the second zone (Z2) and/or the third zone (Z3) and the first zone (Z1), wherein said third element (9) is configured to allow the passage of said fluid (F) and to avoid the passage of said catalyst (C), wherein said first element (7) is connected to said external end (18) by means of a first connection (14) and to said second element (8) by a second connection (15), and wherein said outlet connection (5) is in direct fluid communication with said second zone (Z2).

2. The catalytic tube (T) according to claim 1, which is part of a chemical reactor (R) delimited by one or more retaining walls (2).

3. The catalytic tube (T) according to claim 2, wherein said lower terminal part (4) extends, through said retaining wall (2), to the outside of the reactor (R), and wherein said outlet connection (5) and said transverse opening (11) are placed outside the reactor (R).

4. The catalytic tube (T) according to claim 3, wherein said transverse opening (11) is placed near said retaining wall (2).

5. The catalytic tube (T) according to claim 4, wherein said outlet connection (5) is placed near said third element (9).

6. The catalytic tube (T) according to any claims 1 to 5, wherein said third element (9) is positioned in the pressure tube (3) in such a way that said first zone (Z1) is in direct fluid communication with only said third zone (Z3).

7. The catalytic tube (T) according to any claims 1 to 6, wherein said external end (18) comprises a flange (12) and a blind closing counter flange (13).

8. The catalytic tube (T) according to claim 7, wherein said first connection (14) is made with said blind counter flange (13).

9. The catalytic tube (T) according to any claims 1 to 8, wherein said third element (9) is placed on or fixed to the internal surface (10) of said pressure tube (3).

10. The catalytic tube (T) according to any claims 1 to 9, wherein said second element (8) is placed at the wall of said pressure tube (3), so as to close said transverse opening (11) at its starting point.

11. The catalytic tube (T) according to any claims 1 to 10, wherein said second element (8) is substantially a shaped disc.

12. The catalytic tube (T) according to any claims 1 to 11, wherein said third element (9) is substantially a grid or a perforated plate or a perforated cone.

13. The catalytic tube (T) according to any claims 1 to 12, wherein said first connection (14) and/or said second connection (15) is obtained by welding, screwing, bolting, or interlocking.

14. The catalytic tube (T) according to any claims 1 to 13, wherein said first zone (Z1) is completely or partially filled-in with a thermally insulating material.

15. The catalytic tube (T) according to any claims 1 to 14, wherein said external end (18) has a different metallurgy compared to the metallurgy of the remaining transverse opening (11).

16. The catalytic tube (T) according to any claims 1 to 15, wherein said transverse opening (11) has the second longitudinal axis (1b) forming an acute angle with said first longitudinal axis (1a), in such a way that said external end (18) faces downwards.

17. The catalytic tube (T) according to any claims 1 to 16, wherein said outlet connection (5) develops in an axial or a transverse direction with respect to said first longitudinal axis (1a).

18. The catalytic tube (T) according to any claims 1 to 17, wherein said third element (9) has an inclination with respect to said first longitudinal axis (1a), so as to convey the catalyst (C) towards said transverse opening (11).

19. The catalytic tube (T) according to any claims 1 to 18, which is part of a reactor (R) used for the steam reforming of hydrocarbons.

20. A method for performing maintenance on a catalytic tube (T) according to any claims 1 to 19, the method comprising the following steps not necessarily in the following sequence:
- positioning of a container (B) at said external end (18), wherein said container (B) is designed to contain the catalyst (C);
- opening of the external end (18);
- removal of the portion of the support system (6) placed in the transverse opening (11);
- discharge of the catalysts (C) into the container (B);
- insertion of the portion of the support system (6) into the transverse opening (11);
- closure of the external end (18);
- optional loading of the catalyst (C) into the pressure tube (3) through an opening in the upper part of the catalytic tube (T).

21. The method according to claim 20, wherein said external end (18) corresponds to a flange (12) and a blind closure counter flange (13), wherein said first connection (14) is made with said blind counter flange (13), and wherein said opening operation includes the removal of the blind counter flange (13) together with said portion of the support system (6).

22. The method according to claim 20 or 21, wherein said catalytic tube (T) is part of a chemical reactor (R) delimited by one or more retaining walls (2), and wherein said lower terminal part (4) is either inside the reactor (R) or extends, through said retaining wall (2), outside the reactor (R) in such a way that said transverse opening (11) and said outlet connection (5) are external to the reactor (R).
